# EUROPEAN PATENT SPECIFICATION

(11) **EP 1 985 836 B1**
(45) Date of publication and mention of the grant of the patent: **10.09.2014**
(21) Application number: 08151755.9
(22) Date of filing: 21.02.2008
(51) Int. Cl.: F02M 37/00

(54) **Pressure regulator**
Druckregler
Régulateur de pression

(30) Priority: 24.04.2007 EP 07106807
(43) Date of publication of application: 29.10.2008
(73) Proprietor: Delphi Technologies, Inc., Troy, MI 48007 (US)
(72) Inventor: Marx, Patrice, 54650, Saulnes (FR)
(74) Representative: Robert, Vincent

(56) References cited:
- US-A- 814 285
- US-A- 2 925 824
- US-A- 5 113 831
- US-A- 5 183 074

## Description

### Technical Field

The present invention relates to a pressure regulator, particularly, but not exclusively, a pressure regulator used to avoid overpressure in the fuel delivery system of an automobile.

### Background of the Invention

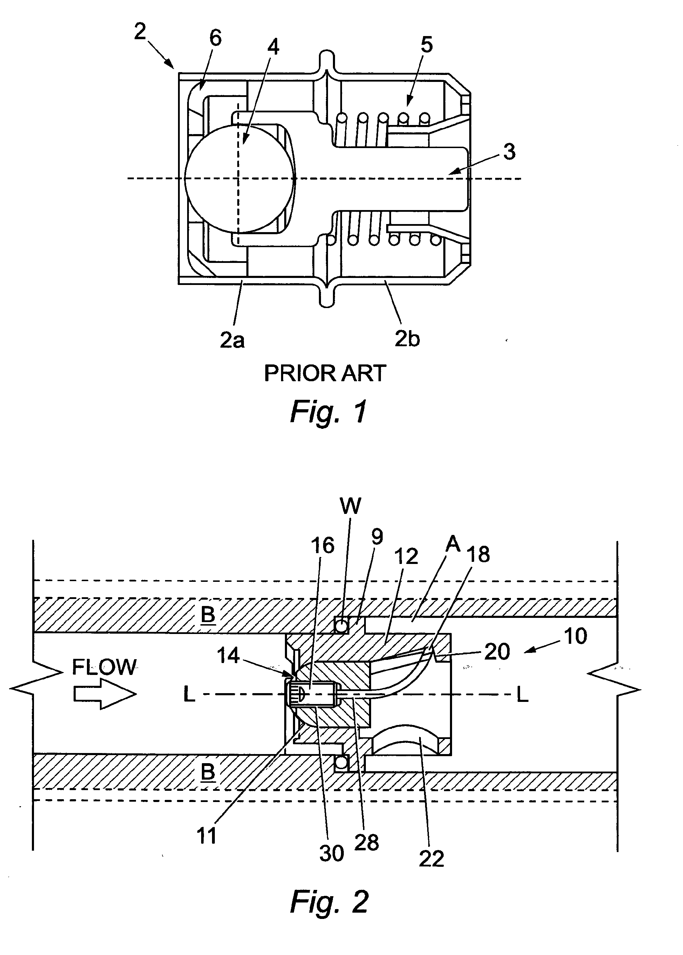

Pressure regulators are used in a variety of applications. In general, although often part of a large and complicated system, the pressure regulator itself often performs essentially the same function regardless of the application. That is, it allows fluid to pass from a first zone to a second zone when the fluid pressure in the first zone is greater than a threshold predetermined maximum. With reference to Fig. 1, this can be achieved by providing a generally cylindrical housing 2 which encloses a cup 3, ball 4 and coiled spring 5. The ball 4 sits in the cup 3 and the two together constitute a head member. The spring 5 serves as resilient means. The cup 3 and ball 4 are held within the housing 2 under the tension of the compressed spring 5 by a cover 6 such that the ball covers an opening in one end of the housing. When fluid on the remote side of the housing 2 to the ball 4 (left hand side of Fig. 1) reaches a threshold activation pressure, and the force on the ball exceeds the force exerted by the spring 5, the spring 5 will begin to compress thereby allowing the cup 3 and ball 4 to move (to the right hand side in Fig. 1) in order to allow fluid to flow through the opening, into the housing 2. The fluid will continue to flow into the housing 2 until the pressure level drops below the threshold at which point the action of the spring 5 will return the ball 4 to the closed position.

A disadvantage of such arrangements is that the housing normally comprises a pair of sections (2a and 2b as shown in Fig. 1) which are snap-fitted together during manufacture. This makes it difficult to provide any way of adjusting the regulator's activation pressure. Another disadvantage is that the coiled spring, ball and cup require relatively large components and are relatively difficult to manufacture.

Pressure regulators which allow the activation pressure to be adjusted are known. An example of such a regulator is described in United States Patent No. 5,186, 147. Another example is disclosed in US Patent No. 5,183,074. However, typically, these adjustable regulators remain difficult to manufacture and install. Furthermore, the geometrical arrangement of such known regulators makes access and manipulation of the adjustment means difficult.

### Summary of the invention

According to the present invention there is provided a pressure regulator comprising a housing, a pressure actuated head member being actuable between an open and a closed position when a sufficient pressure differential across the housing is present, an adjustment member, a resilient means for imparting a resilient force on the adjustment member thereby to urge the pressure actuated head member toward the closed position, said pressure actuated head member having a partial through bore therein, said adjustment member being provided in the partial through bore of the pressure actuated head member, the adjustment member being movable along the partial through bore of the pressure actuated head member, adjustment of the adjustment member along the partial through bore varying the force exerted by the resilient means and thereby the force exerted on the pressure actuated head member.

Preferred features and advantages of the invention will be apparent from the following description and the claims.

### Brief Description of the Drawings

Embodiments of the present invention will now be described, by way of example only, with reference to the accompanying drawings, in which:-
Fig. 1 is a transverse cross sectional view of a non-adjustable prior art regulator not in accordance with the present invention;
Fig. 2 is a transverse cross sectional view of a pressure regulator according to the present invention, where the pressure regulator is installed in a nominal bore of a fuel delivery system;
Fig. 3 is a partial cut-away perspective view of the pressure regulator according to the present invention where the head of the pressure regulator is in the closed position;
Fig. 4 is a perspective view from the underside of the pressure regulator of Fig. 3;
Fig. 5A is perspective view from the upper end of the pressure regulator where the head of the pressure regulator is in the closed position;
Fig. 5B is perspective view from the upper end of the pressure regulator where the head of the pressure regulator is in the open position;
Fig. 6 is a cut-away perspective illustration viewed along the line A-A of Fig. 5; and
Fig. 7 is a perspective view from the underside of the pressure regulator of Fig. 3, where the head of the pressure regulator is in the open position and the resilient member is buckled by a greater amount than that shown in Fig. 4.

### Description of the Preferred Embodiments

Referring to Fig. 2, a pressure regulator 10 has a housing 12 installed in a nominal bore B in which the pressure is to be regulated. In Fig. 2, the upper end of the pressure regulator 10 is toward the left hand side of the bore B and the lower end toward the right hand side of the bore B such that the flow of fluid from a relatively high pressure zone (on the left of regulator 10) to a relatively low pressure zone (on the right of the regulator 10) is regulated.

A sealing ridge 9 extends around the outer circumference of the housing 12 in order to close an annulus A between the housing 12 and the bore B. A washer W is provided on the ridge 9 in order to provide a fluid tight seal there across.

Pressure actuated head member 14 rests within a correspondingly shaped seat 11 of the housing 12 and is also provided with an adjustment member 16. The adjustment member 16 and pressure actuated head member 14 are urged toward the seat 11 of the housing 12 due to a resilient force provided by the resilient member 18 which is buckled between the adjusting member 16 and a securing point 20 on the inside surface of the housing 12. In this regard, the term "buckled" will be understood by the skilled reader to mean that the member is temporarily warped, bent or otherwise deformed from its otherwise normal shape in order to provide resilience. In other words, once buckled there is a tendency for the material of the resilient member 18 to return to it's original shape.

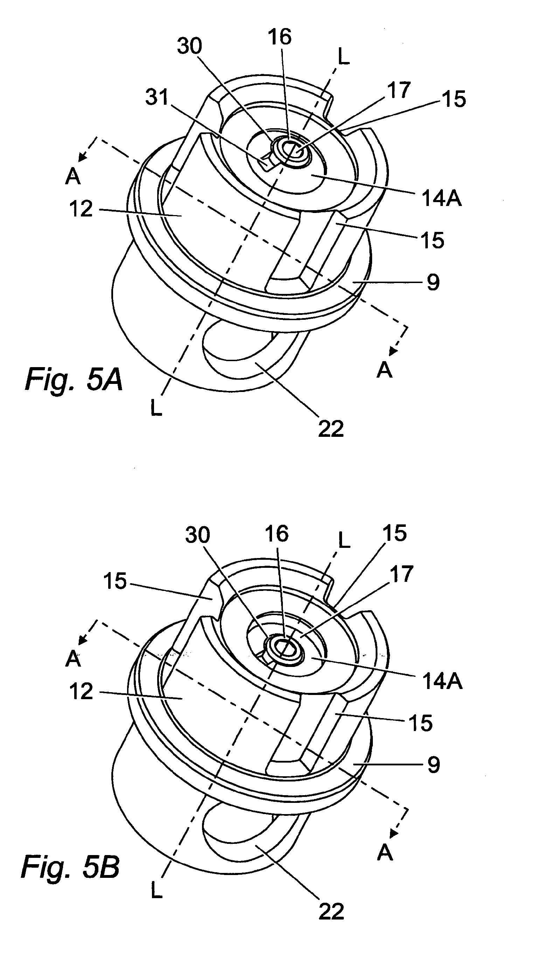

As seen in Fig. 5A and Fig. 5B, a tool socket 17 is provided in the top of the adjustment member 16. In the present embodiment the tool (not shown) socket 17 is shaped to receive an end of a hexagonal adjustment tool such as an Allen key, although it could alternatively be shaped to receive any suitable shape of tool.

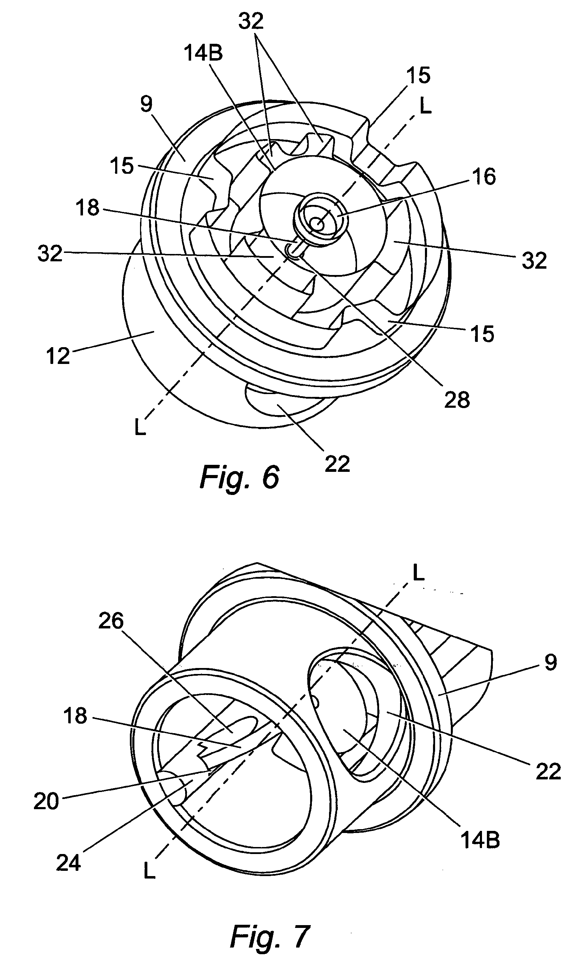

The resilient member 16 may be formed of any suitably resilient material. An example of a suitable resilient member is a strip of metal having a width and breadth that is substantially less than its length. The resilient member 16 is restrained at its lower end by being wedged against the lip formed at securing point 20 and at its upper end by insertion into an orifice 28 in the rear of the cylindrical tail section 14B to engage the lower end surface of the adjustment member 16. This is best illustrated by Fig. 6.

The pressure actuated head member 14 has a semi-hemispherical nose section 14A and a cylindrical tail section 14B. Adjustment member 16 is positioned within an enlarged partial through bore 30 in the nose section 14A of the head member 14 and comprises a threaded screw (not shown) which co-operates with a corresponding screw thread (not shown) in the inner walls of the enlarged partial through bore 30 such that rotation of the adjustment member 16 causes it to move up and down the longitudinal axis L of the regulator 10. As shown in Fig. 2, 5A and 5B, the length of the partial though bore 30 and the adjustment member 16 are similar, such that when the adjustment member 16 sits within the partial though bore 16 its head is relatively flush with the outer surface of the semi-hemispherical head 14A of the head member 14 (although it will be appreciated that the relative flushness of the adjustment member and the outer surface of the semi-hemispherical head 14A will vary as the adjustment member is adjusted up and down the longitudinal axis L of the regulator 12). In this regard, the cylindrical tail section 14B of the head member 14, in conjunction with the similarly shaped internal valve seat 11 of the regulator, ensures that the head member 14 does not tilt as it moves along the longitudinal axis L.

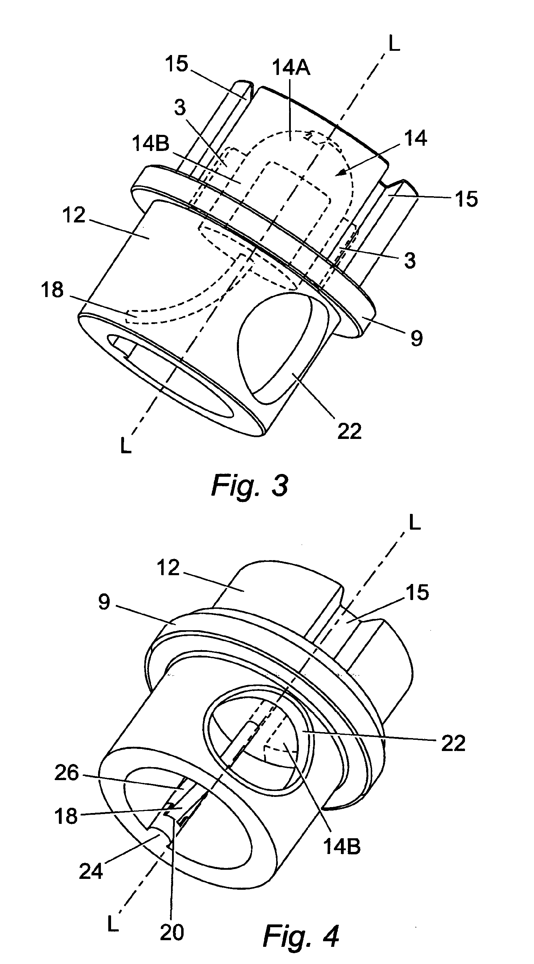

An access window 22 is provided in the wall of the regulator housing 12 opposite the securing point 20. This provides access to the inner wall of the regulator housing 12 during manufacture to allow tooling of the securing point 20. With particular reference to Figs. 4 and 7, a longitudinal ridge 24 protrudes from the inner wall of the regulator housing 12 opposite the access window 22. A detent 26 which terminates in a ledge (securing point 20) is formed on the longitudinal ridge 24.

Referring to Figs. 3 and 6, the internal bore of the regulator 12 is provided with a series of fluid communication passageways 32 spaced around the circumference of the head member 14. The fluid communication passageways extend longitudinally from the top (adjacent the intersection between the cylindrical tail section 14B and the semi-hemispherical head section 14A) and toward the bottom (adjacent the lower end of the cylindrical tail section 14B). Three longitudinal grooves 15 are also provided on the upper external wall of the regulator 12. These grooves 15 ensure a constant thickness is provided in the material (typically plastic) wall thereby providing an improved injection process.

In use, when the bore pressure on one side of the regulator 10 (left hand side in Fig. 2) increases beyond a threshold pressure, the head member 14 will be urged toward the other side of the regulator 10. As the head member 14 moves it lifts from its seat 11 in the housing 12 thereby allowing fluid to flow between the resultant gap between the semi-hemispherical had member 14A and the seat 11, through the fluid communication passageways 32 and hence out through the bottom of the regulator 12.

Once the overpressure has been released, the resilient member 18, which by now will have been buckled further by the head member 14, urges the head member 14 back toward the closed position in order to prevent flow of fluid through the regulator.

In order to adjust the pressure at which the regulator 12 will open to allow flow of fluid through, the closing force provided by the resilient member 18 can be easily adjusted by inserting a suitable tool into the tool socket 17 and rotating the adjustment member 16. In this regard, the top of the hemispherical nose section 14A is provided with a transverse holding slot 31 adjacent the through bore 30 which allows the nose section 14A to be held against rotation as the adjustment member 16 is rotated. As seen in the figure, the closing force is related to the radius of curvature of the resilient member 18 such that rotating the adjustment member 16 alters the radius of curvature of the resilient member 18. Therefore if a relatively high maximum pressure is desired before the pressure regulator 10 will allow fluid to flow through it, the force provided by the resilient member 18 can be increased by screwing the adjusting member 16 further into the partial through bore 30 whereas if a relatively low maximum pressure is desired before the pressure regulator 10 will allow fluid to flow through it, the force provided by the resilient member 18 can be decreased by screwing the adjusting member 16 further out of the partial through bore 30.

Modifications and improvements may be made to the foregoing without departing from the scope of the invention.

## Claims

1. A pressure regulator comprising:-
a housing (12);
a pressure actuated head member (14) being actuable between an open and a closed position when a sufficient pressure differential across the housing (12) is present;
an adjustment member (16);
a resilient means (18) for imparting a resilient force on the adjustment member (16) thereby to urge the pressure actuated head member (14) toward the closed position;
**characterized by**
said pressure actuated head member (14) having a partial through bore (30) therein;
said adjustment member (16) being provided in the partial through bore (30) of the pressure actuated head member (14), the adjustment member (16) being movable along the partial through bore (30) of the pressure actuated head member (14);
adjustment of the adjustment member (16) along the partial through bore (30) varying the force exerted by the resilient means (18) and thereby the force exerted on the pressure actuated head member (14) .

2. A pressure regulator according to claim 1, wherein a securing point (20) is provided on the housing (12) to secure the resilient means (18) thereto.

3. A pressure regulator according to claim 2, wherein the securing point (20) comprises a longitudinal ridge (24) protruding from an inner wall of the regulator housing (12), the longitudinal ridge (24) having a detent (26) which terminates in a ledge for receiving one end of the resilient means (18).

4. A pressure regulator according to either of claims 2 or 3, wherein an access window (22) is provided through a wall of the regulator housing (12) opposite the securing point (20) in order to allow tooling of the securing point (20).

5. A pressure regulator according to any of claims 2 to 4, wherein the resilient means comprises an elongate resilient member (18) positioned between the adjustment member (16) and the securing point (20) on the housing (12).

6. A pressure regulator according to claim 5, wherein the elongate resilient member (18) is positioned between the adjustment member (16) and the securing point (20) of the housing (12) in a buckled state.

7. A pressure regulator according to either of claims 5 or 6, wherein the resilient means (18) comprises a buckled strip of metal having a width and breadth that is substantially less than the strip's length.

8. A pressure regulator according to any of claims 5 to 7, wherein the base of the head member (14) is provided with an orifice (28) to receive the top of the elongate resilient member (18) therethrough such that the top of the elongate resilient member (18) protrudes into the partial through bore (30) and abuts against the base of the adjustment member (16).

9. A pressure regulator according to claim 8, wherein the adjustment member (16) comprises a threaded screw arrangement which when screwed in one direction causes the adjustment member (16) to pass into the partial through bore (30) thereby increasing the buckle of the resilient means (18) and when screwed in the opposite direction causes the adjustment member (16) to allow the buckle of the resilient means (18) to decrease.

10. A pressure regulator according to claim 9, wherein the threaded screw arrangement is provided with a flush head capable of receiving a tool suitable for adjustment of the adjustment member (16).

11. A pressure regulator according to any preceding claim, wherein the pressure actuated head member (14) comprises a rounded nose section (14A) and the regulator housing (12) comprises a correspondingly shaped seat (11) such that when the rounded nose section (14A) abuts against the correspondingly shaped seat (11), a substantially fluid-tight seal is created therebetween.

12. A pressure regulator according to any preceding claim, wherein the pressure actuated head member (14) comprises a cylindrical tail section (14B).

13. A pressure regulator according to claims 11 or 12, wherein at least a fluid communication passageway (32) is provided around the pressure actuated head member (14) such that when the pressure actuated head member moves from the seat (11), fluid may flow there along from one side of the pressure regulator to the other.

14. A pressure regulator according to claim 13, wherein a plurality of fluid communication passageways (32) are spaced around the circumference of the cylindrical tail section (14B).

## Patentansprüche

1. Ein Druckregler, der aufweist:
ein Gehäuse (12);
ein druckbetätigtes Kopfelement (14), das zwischen einer offenen und einer geschlossenen Position betätigbar ist, wenn eine ausreichende Druckdifferenz über das Gehäuse (12) vorhanden ist;
ein Anpassungselement (16);
ein elastisches Mittel (18) zum Ausüben einer elastischen Kraft auf das Anpassungselement (16), um dadurch das druckbetätigte Kopfelement (14) in die geschlossene Position zu bringen;
**dadurch gekennzeichnet, dass**
das druckbetätigte Kopfelement (14) eine Teildurchgangsbohrung (30) darin hat;
das Anpassungselement (16) in der Teildurchgangsbohrung (30) des druckbetätigten Kopfelements (14) vorgesehen ist, wobei das Anpassungselement (16) entlang der Teildurchgangsbohrung (30) des druckbetätigten Kopfelements (14) bewegbar ist;
eine Anpassung des Anpassungselements (16) entlang der Teildurchgangsbohrung (30) die Kraft variiert, die durch das elastische Mittel (18) ausgeübt wird, und dadurch die Kraft, die auf das druckbetätigte Kopfelement (14) ausgeübt wird.

2. Ein Druckregler gemäß Anspruch 1, wobei ein Befestigungspunkt (20) an dem Gehäuse (12) vorgesehen ist, um das elastische Mittel (18) daran zu befestigen.

3. Ein Druckregler gemäß Anspruch 2, wobei der Befestigungspunkt (20) eine Längsrippe (24) aufweist, die von einer inneren Wand des Reglergehäuses (12) hervorsteht, wobei die Längsrippe (24) eine Rastung (26) hat, die in einem Vorsprung endet zur Aufnahme eines Endes des elastischen Mittels (18).

4. Ein Druckregler gemäß einem der Ansprüche 2 oder 3, wobei ein Zugangsfenster (22) durch eine Wand des Reglergehäuses (12) gegenüber dem Befestigungspunkt (20) vorgesehen ist, um ein Bearbeiten des Befestigungspunkts (20) zu ermöglichen.

5. Ein Druckregler gemäß einem der Ansprüche 2 bis 4, wobei das elastische Mittel ein längliches elastisches Element (18) aufweist, das zwischen dem Anpassungselement (16) und dem Befestigungspunkt (20) an dem Gehäuse (12) positioniert ist.

6. Ein Druckregler gemäß Anspruch 5, wobei das längliche elastische Element (18) zwischen dem Anpassungselement (16) und dem Befestigungspunkt (20) des Gehäuses (12) in einem verformten Zustand positioniert ist.

7. Ein Druckregler gemäß einem der Ansprüche 5 oder 6, wobei das elastische Mittel (18) einen verformten Metallstreifen mit einer Breite und Weite aufweist, die wesentlich geringer ist als die Länge des Streifens.

8. Ein Druckregler gemäß einem der Ansprüche 5 bis 7, wobei die Basis des Kopfelements (14) mit einer Öffnung (28) vorgesehen ist, um die Oberseite des länglichen elastischen Elements (18) hindurch aufzunehmen derart, dass die Oberseite des länglichen elastische Elements (18) in die Teildurchgangsbohrung (30) ragt und an der Basis des Anpassungselements (16) anliegt.

9. Ein Druckregler gemäß Anspruch 8, wobei das Anpassungselement (16) eine Gewindeschraubenanordnung aufweist, die, wenn in eine Richtung geschraubt, das Anpassungselement (16) veranlasst, in die Teildurchgangsbohrung (30) zu gehen, wodurch die Verformung des elastischen Mittels (18) zunimmt, und, wenn in die entgegengesetzte Richtung geschraubt, das Anpassungselement (16) veranlasst, zu ermöglichen, dass die Verformung des elastischen Mittels (18) abnimmt.

10. Ein Druckregler gemäß Anspruch 9, wobei die Gewindeschraubenanordnung mit einem Versenkkopf vorgesehen ist, der ein Werkzeug aufnehmen kann, das zum Anpassen des Anpassungselements (16) geeignet ist.

11. Ein Druckregler gemäß einem vorhergehenden Anspruch, wobei das druckbetätigte Kopfelement (14) einen abgerundeten Nasenabschnitt (14A) aufweist und das Reglergehäuse (12) einen entsprechend geformten Sitz (11) aufweist derart, dass, wenn der gerundete Nasenabschnitt (14A) an den entsprechend geformten Sitz (11) anliegt, eine im Wesentlichen Fluid-dichte Abdichtung dazwischen erzeugt wird.

12. Ein Druckregler gemäß einem vorhergehenden Anspruch, wobei das druckbetätigte Kopfelement (14) einen zylindrischen Endabschnitt (14B) aufweist.

13. Ein Druckregler gemäß den Ansprüchen 11 oder 12, wobei zumindest ein Fluid-Verbindungsdurchlass (32) um das druckbetätigte Kopfelement (14) vorgesehen ist derart, dass, wenn sich das druckbetätigte Kopfelement von dem Sitz (11) bewegt, Fluid dort entlang von einer Seite des Druckreglers zu der anderen fließen kann.

14. Ein Druckregler gemäß Anspruch 13, wobei eine Vielzahl von Fluid-Verbindungsdurchlässen (32) um den Umfang des zylindrischen Endabschnitts (14B) beabstandet ist.

## Revendications

1. Régulateur de pression comprenant :
un boîtier (12) ;
un élément de tête actionné par pression (14) capable d'être actionné entre une position ouverte et une position fermée quand se présente une différentielle pression suffisante de part et d'autre du boîtier (12) ;
un élément d'ajustement (16) ;
un moyen élastique (18) pour imposer une force élastique sur l'élément d'ajustement (16) et forcer ainsi l'élément de tête actionné par pression (14) vers la position fermée ;
**caractérisé en ce que**
ledit élément de tête actionné par pression (14) comporte à l'intérieur un perçage partiellement traversant (30) ;
ledit élément d'ajustement (16) étant prévu dans le perçage partiellement traversant (30) de l'élément de tête actionné par pression (14), l'élément d'ajustement (16) étant déplaçable le long du perçage partiellement traversant (30) de l'élément de tête actionné par pression (14) ;
fajustement de l'élément d'ajustement (16) le long du perçage partiellement traversant (30) faisant varier la force exercée par le moyen élastique (18) et ainsi la force exercée sur l'élément de tête actionné par pression (14).

2. Régulateur de pression selon la revendication 1, dans lequel un point d'attache (20) est prévu sur le boîtier (12) pour attacher le moyen élastique (18) sur celui-ci.

3. Régulateur de pression selon la revendication 2, dans lequel le point d'attache (20) comprend un bourrelet longitudinal (24) qui se projette depuis une paroi intérieure du boîtier de régulateur (12), le bourrelet longitudinal (24) ayant un cran (26) qui se termine par un rebord pour recevoir une extrémité du moyen élastique (18).

4. Régulateur de pression selon l'une ou l'autre des revendications 2 ou 3, dans lequel une fenêtre d'accès (22) est prévue à travers une paroi du boîtier de régulateur (12) à l'opposé du point d'attache (20) afin de permettre l'usinage du point d'attache (20).

5. Régulateur de pression selon l'une quelconque des revendications 2 à 4, dans lequel le moyen élastique comprend un élément élastique allongé (18) positionné entre l'élément d'ajustement (16) et le point d'attache (20) sur le boîtier (12).

6. Régulateur de pression selon la revendication 5, dans lequel l'élément élastique allongé (18) est positionné entre l'élément d'ajustement (16) et le point d'attache (20) du boîtier (12) dans un état cintré.

7. Régulateur de pression selon l'une ou l'autre des revendications 5 ou 6, dans lequel le moyen élastique (18) comprend un ruban de métal cintré ayant une largeur et une épaisseur qui sont sensiblement inférieures à la longueur du ruban.

8. Régulateur de pression selon l'une quelconque des revendications 5 à 7, dans lequel la base de l'élément de tête (14) est dotée d'un orifice (28) pour recevoir le sommet de l'élément élastique allongé (18) à travers celui-ci, de telle façon que le sommet de l'élément élastique allongé (18) se projette jusque dans le perçage partiellement traversant (30) et vient buter contre la base de l'élément d'ajustement (16).

9. Régulateur de pression selon la revendication 8, dans lequel l'élément d'ajustement (16) comprend un agencement à vis qui, lorsqu'il est vissé dans une direction, amène l'élément d'ajustement (16) à entrer dans le perçage partiellement traversant (30) pour augmenter ainsi le cintrage du moyen élastique (18) et qui, lorsqu'il est vissé dans la direction opposée, amène l'élément d'ajustement (16) à permettre une diminution du cintrage du moyen élastique (18).

10. Régulateur de pression selon la revendication 9, dans lequel l'agencement à vis est doté d'une tête en affleurement capable de recevoir un outil convenable pour l'ajustement de l'élément d'ajustement (16).

11. Régulateur de pression selon l'une quelconque des revendications précédentes, dans lequel l'élément de tête actionné par pression (14) comprend une section en forme de nez arrondi (14A), et le boîtier de régulateur (12) comprend un siège (11) de forme correspondante de telle façon que, quand la section en forme de nez arrondi (14A) vient buter contre le siège (11) de forme correspondante, un joint sensiblement étanche aux fluides est créé entre eux.

12. Régulateur de pression selon l'une quelconque des revendications précédentes, dans lequel l'élément de tête actionné par pression (14) comprend une section en forme de queue cylindrique (14B).

13. Régulateur de pression selon les revendications 11 ou 12, dans lequel au moins un passage de communication fluidique (32) est prévu autour de l'élément de tête actionné par pression (14) de telle façon que lorsque l'élément de tête actionné par pression se déplace depuis le siège (11), du fluide peut s'écouler le long de celui-ci depuis un côté du régulateur de pression vers l'autre.

14. Régulateur de pression selon la revendication 13, dans lequel une pluralité de passages de communication fluidiques (32) sont espacés autour de la circonférence de la section en forme de queue cylindrique (14B).
